(19) Europäisches Patentamt
European Patent Office
Office européen des brevets

(11) EP 3 318 137 B1

(12) EUROPEAN PATENT SPECIFICATION

(45) Date of publication and mention
of the grant of the patent:
01.04.2020 Bulletin 2020/14

(51) Int Cl.:
A23L 29/20 (2016.01)          A23L 27/60 (2016.01)
B65D 25/14 (2006.01)          B65D 85/72 (2006.01)

(21) Application number: 16817787.1

(22) Date of filing: 22.06.2016

(86) International application number:
PCT/JP2016/068498

(87) International publication number:
WO 2017/002679 (05.01.2017 Gazette 2017/01)

(54) **STRUCTURE WITH LIQUID FILM FORMED ON SURFACE**

STRUKTUR MIT AUF DER OBERFLÄCHE AUSGEBILDETEM FLÜSSIGKEITSFILM

STRUCTURE COMPORTANT UN FILM LIQUIDE SUR SA SURFACE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 01.07.2015 JP 2015132616
01.07.2015 JP 2015132617

(43) Date of publication of application:
09.05.2018 Bulletin 2018/19

(73) Proprietors:
• Toyo Seikan Co., Ltd.
Tokyo 141-8640 (JP)
• Toyo Seikan Group Holdings, Ltd.
Shinagawa-ku
Tokyo 141-8627 (JP)

(72) Inventors:
• NYUU, Keisuke
Yokohama-shi
Kanagawa 230-0001 (JP)
• OKADA, Yoshiaki
Yokohama-shi
Kanagawa 230-0001 (JP)
• MIYAZAKI, Tomoyuki
Yokohama-shi
Kanagawa 230-0001 (JP)
• AKUTSU, Yosuke
Yokohama-shi
Kanagawa 240-0062 (JP)
• IWAMOTO, Shinya
Yokohama-shi
Kanagawa 240-0062 (JP)

(74) Representative: J A Kemp LLP
14 South Square
Gray's Inn
London WC1R 5JJ (GB)

(56) References cited:
WO-A1-2007/111232      WO-A1-2014/010534
WO-A1-2014/010534      WO-A1-2014/123217
WO-A1-2014/123217      JP-A- H01 131 549
JP-A- 2005 224 101     JP-A- 2011 511 055
JP-B1- 5 713 154       JP-B1- 5 713 154

• JASON R. STOKES ET AL: "Lubrication,
Adsorption, and Rheology of Aqueous
Polysaccharide Solutions", LANGMUIR, vol. 27,
no. 7, 5 April 2011 (2011-04-05), pages 3474-3484,
XP055517799, US ISSN: 0743-7463, DOI:
10.1021/la104040d
• X. D. WANG ET AL: "Spreading Dynamics and
Dynamic Contact Angle of Non-Newtonian
Fluids", LANGMUIR, vol. 23, no. 15, 1 July 2007
(2007-07-01), pages 8042-8047, XP55518282, US
ISSN: 0743-7463, DOI: 10.1021/la0701125

**Description**

Technical Field:

The present invention relates to a structured body having a liquid film formed thereon to improve its slipperiness.

Background Art:

A container to contain a liquid content is required to have a discharge ability with respect to the content irrespective of materials of the container. In a case of containing a liquid having a lower viscosity such as water, there is substantially no necessity to take the discharge ability into consideration. However, in a case of containing a viscous and thick substance having high viscosity, like mayonnaise and ketchup, the discharge ability may have a considerable influence on both a plastic container and a glass container. More specifically, the content would not be discharged quickly even by tilting the container, and the content would adhere to the container wall, and thus, it cannot be used up. As a result, a considerable amount of the content would not be discharged but remain particularly on the bottom of the container.

Recently, various techniques have been proposed to increase slipperiness to a viscous and thick substances by forming an oil film on an inner surface of a base material such as a container (for example, Patent documents 1 and 2).

These techniques have been focused recently since it is possible to improve drastically slipperiness in comparison with a case of adding additives such as a lubricant to a synthetic resin that forms an inner surface of a base material.

Further, Patent document 3 proposes a mold release oil made from a water-in-oil emulsion comprising a liquid fat/oil component, animal/plant-derived wax, and water. This document indicates that this mold release oil is sprayed on a container to prevent adhesion of dough to the container at the time of baking bread or cakes.

Furthermore, the applicants have proposed a packaging container for accommodating an oil-in-water emulsion as a content represented by a mayonnaise-type food. The container has an oil film formed on the container inner surface to be in contact with the oil-in-water emulsion (Japanese Patent Application 2014-023425).

However, in the aforementioned techniques to form an oil film on the base material surface to modify the surface characteristics, the slipperiness exhibited by the oil film has a short effective life. After a long period of time, the slipperiness may deteriorate and sometimes result in problems, for instance, the contents or the like may adhere to the surface. This tendency is particularly noticeable when the substance to slip on the surface is an emulsion, in particular a mayonnaise-type food including a small amount of oil.

When a viscous and thick emulsion flows on the oil film, the emulsion may involve air bubbles to cause distribution of the air bubbles on the interface between the emulsion and the base material surface (oil film surface). In a transparent bottle filled with the mayonnaise-type food or the like, the distribution of air bubbles may be visually observed clearly from the outside, and it may impair the appearance from an esthetical viewpoint to degrade the commodity value, thereby causing an extremely serious problem. Further, in a case of air bubble distribution as mentioned above, for instance when an emulsion is discharged from the container, the shape of the air bubbles may be reflected on the surface of the discharged emulsion. As a result, the emulsion surface, which inherently should be smooth, may be irregular.

The present inventors have found that the aforementioned problems caused by the air bubble distribution are noticeable in particular when the mayonnaise-type food including a small amount of oil substance (lipid component) flows on the oil film surface.

Patent document 4 relates to the lubrication, adsorption and rheology of aqueous polysaccharide solutions.

Patent document 5 relates to the spreading dynamics and dynamic contact angle of non-Newtonian fluids.

Patent document 6 relates to a packaging container for which content slipperiness and non-stick properties have been markedly improved. The packaging container is characterised in that the packaging container when filled with contents (7), at least a portion of the surface in contact with the contents (7) is a liquid permeable surface (1) and a liquid (lubricating liquid (5)) that differs from the contents (7) is held in the liquid-permeable surface.

Patent document 7 relates to a blow-formed container having a liquid layer 3 formed in an amount of not more than 10 g/m2 on the whole inner surface of the stretched portion thereof. The container has a liquid layer that is thinly and uniformly formed on the inner surface thereof, the liquid layer exhibiting slipping property for the fluid content and enabling the container to exhibit excellent slip-down property maintaining stability.

Patent document 8 relates to a container which accommodates a fluid substance as the content thereof, and is characterized by the surface of the container that makes contact with the content being formed from a resin composition containing a molding resin and a liquid that is immiscible with the fluid substance. The container exhibits the benefits of significantly increased slide properties with respect to the fluid content, and of being easily manufactured.

Patent document 9 relates to the enablement of uniform coating in a stage of forming a layer of laminated liquid films on a travelling base body by forming the liquid films by falling down the liquid films freely and vertically from an end of an inclined slide face wherein the viscosity of the liquid for the lowermost layer, and the uppermost layer, and the ratio of the viscosities of liquids for two adjacent laminated layers to each other are regulated to specified values. At least two liquid layers are laminated on an inclined surface of a slide and fallen vertically from a canopy top at an end of the slide and a laminated liquid layer film formed by the free falling of the liquid is landed on a travelling base body to form thus a laminated film layer. In this state, the viscosity of the liquid for forming the lowermost layer 2 and the uppermost layer 1 are regulated respectively to ≥40cP and ≤30cP, and the ratio of viscosities of the liquid for the adjacent two laminated layers to each other is regulated to ≤2 basing on the viscosity of the liquid at a low viscosity side. The inclination of the slide surface is preferably 30-70 deg. to a horizontal face. By this constitution, the grade of quality of coating is improved by retarding turbulence of a coated surface.

Prior Art Documents:

Patent Documents:

Patent document 1: WO2012/100099
Patent document 2: WO2013/022467
Patent document 3: JP-A-2008-22791
Patent document 4: Stokes et al., Langmuir 2011, 27(7), 3474-3484
Patent document 5: Wang et al., Langmuir 2007, 23(15), 8042-8047
Patent document 6: WO 2014/010534
Patent document 7: JP 5713154
Patent document 8: WO 2014/123217
Patent document 9: JP H01131549

Summary of the Invention:

Problems to be solved by the invention:

Therefore, an object of the present invention is to provide a structured body having a liquid film to improve slipperiness to a viscous and thick substance, and the liquid film is formed on a surface of the base material, and the liquid film exhibits its improved slipperiness stably in a sustainable manner.
Another object of the present invention is to provide a structured body, especially a container, which may effectively avoid involvement of air bubbles when an emulsion flows on the surface of the liquid film, thereby preventing efficiently problems such as poor appearance caused by the involvement of air bubbles.

Means for solving the problems:

The present invention provides a structured body including a base material and a liquid film formed on a surface of the base material, wherein the liquid film is formed of a non-Newtonian aqueous liquid;
the non-Newtonian aqueous liquid is water thickened with a water-soluble polymer;
a viscous substance is present on the liquid film and the viscous substance is an emulsion; and
the base material is a container, the liquid film is formed on an inner surface of the container, and the viscous substance is a content contained in the container.
The following embodiments are preferable for the structured body of the present invention.

(1) The water-soluble polymer is at least one selected from a group consisting of xanthan gum, guar gum, gellan gum, pectin, carboxymethyl cellulose, gelatin, alginic acid, agar and carrageenan.
(2) The non-Newtonian aqueous liquid has a viscosity, measured using a turning-fork type vibration viscometer SV-10, of not less than 500 mPa•s at 25°C in a measurement at a number of revolutions of 20 rpm.
(3) The liquid film is formed on the surface of the base material in an amount of 0.5 to 10 mg/cm$^2$.
(4) The emulsion is a mayonnaise-type food.
(5) The non-Newtonian aqueous liquid satisfies formula (1) below:

$$\theta_1 > \theta_2 \qquad (1)$$

wherein $\theta_1$ is a contact angle of the aqueous liquid on the base material in air, and $\theta_2$ is a contact angle of the aqueous liquid on the viscous substance in air.

(6) The contact angle $\theta_1$ of the non-Newtonian aqueous liquid on the base material in air is not less than 70°.
(7) The base material has a surface of resin.
(8) The resin is polyolefin or polyester.

Effects of the invention:

The structured body of the present invention exhibits excellent slipperiness to various viscous substances, and furthermore it can prevent or control effectively degradation in the slipperiness caused by aging. In other words, the structured body exhibits excellent slipperiness to a viscous and thick emulsion, and furthermore, this slipperiness is exhibited stably for a long time.

For instance, Example 1 below refers to a structured body (directly blow-formed container) having a liquid film of an aqueous solution of 1 part by weight of xanthan gum (non-Newtonian aqueous liquid), which is formed on the inner surface of an olefin resin according to the present invention.

This directly blow-formed container is filled with a content of an oil-in-water emulsion. After a one-week storage at room temperature, substantially all of the content can be discharged quickly (i.e., the initial slipperiness is high). Even after an additional storage of about two months after the filling of the content and the storage of one week at room temperature, substantially all of the content can be discharged similarly (i.e., the overtime slipperiness is also high).

In contrast, a directly blow-formed container in Comparative Example 1, which has a liquid film formed of an edible oil alone, exhibits a certain degree of initial slipperiness, but the overtime slipperiness after a certain time as described above deteriorates considerably, and the amount of content remaining inside the container increases.

In the structured body of the present invention, involvement of air bubbles at the time the emulsion flows on the surface is prevented or controlled effectively, and the problem of air bubble distribution on the interface between the emulsion and the base material surface can be prevented effectively. If the base material is a transparent container, distributed air bubbles may be recognized from outside to degrade the appearance of the container. The structured body of the present invention can prevent effectively this problem.

When air bubbles are distributed as described above, the air bubbles may be recognized on the surface of the emulsion being discharged from the container, thereby impairing the smoothness of the emulsion surface. The present invention may avoid this problem effectively since the air bubble distribution may be prevented or controlled.

For instance, as described in Examples 3-10 below, generation of air bubbles is prevented effectively even when a mayonnaise-type food including a small amount of lipid (lipid component content: 34%) slides downward on the surface of the structured body.

Therefore, the structured body of the present invention is used as a container for containing an emulsion (a viscous substance). More specifically, it may be used preferably as a transparent container for containing a viscous and thick emulsion such as a mayonnaise-type food, and particularly as a directly blow-formed container.

Brief Description of the Drawings:

[Fig. 1]: a schematic side cross-sectional view showing a surface shape of a structured body of the present invention.
[Fig. 2] : a view showing a distribution of air bubbles generated on a conventionally known structured body.
[Fig. 3] : a view showing a shape of a directly blow-formed bottle as a preferable example of a structured body of the present invention.
[Fig. 4] : a view showing a multi-tube nozzle used for filling with a content.
[Fig. 5] : a view showing a process of filling of a content and forming a liquid film by use of a multi-tube nozzle.

Mode for Carrying Out the Invention:

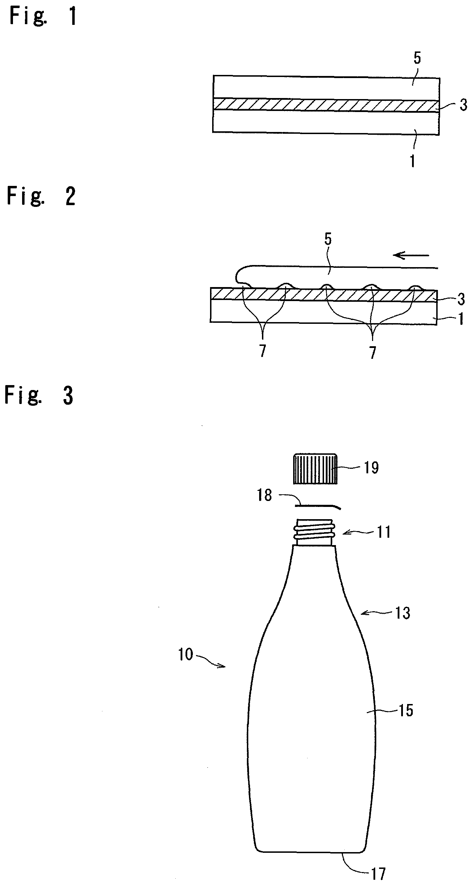

A base material 1 of the structured body of the present invention shown in Fig. 1 is shaped in accordance with the application, and a liquid film 3 is formed on a surface thereof. This liquid film 3 is formed of a non-Newtonian aqueous liquid, and a viscous substance 5 is present thereon to be in contact with the liquid film 3.

<Principle of slipperiness expression and prevention of air bubble involvement>

The structured body of the present invention includes the liquid film 3 of a non-Newtonian aqueous liquid, which is represented by an aqueous solution of polymer and interposed between the viscous substance 5 and the base material 1, so that the slipperiness to various viscous substances and the overtime stability of the slipperiness can be ensured, and furthermore, involvement of air bubbles at the time the viscous substance 5 flows on the liquid film 3 can be prevented effectively.

The expression of slipperiness and prevention of involvement of air bubbles have been found as phenomena through numbers of experiments, but the reason has not been clarified yet. The present inventors presumes, however, that these features are provided by the non-Newtonian aqueous liquid, since the non-Newtonian aqueous liquid is basically a highly viscous liquid and it exhibits behaviors peculiar to a non-Newtonian fluid.

For instance, when an oil film of an oily liquid such as an edible oil is provided on the surface (inner surface) of the base material 1 such as a plastic container, the oily liquid that forms the oil film may be absorbed in the base material 1. When this oil film of oily liquid is in contact with the viscous substance 5 like an emulsion, the oil film may be absorbed in not only the base material 1 but the emulsion. As a result, the slipperiness exhibited by this oil film may deteriorate over time. The deterioration in the slipperiness may be particularly noticeable in a case where the emulsion is in contact therewith.

On the other hands, in the present invention where the liquid film 3 of a non-Newtonian aqueous liquid is formed on the surface of the base material 1, absorption by the base material 1 may not occur.

Furthermore, unlike the case where a Newton fluid is used, the liquid film 3 exhibits an extremely high viscosity due to the behavior of the non-Newtonian aqueous liquid when shear force is not applied. Water contained in the aqueous liquid is held by the solute (e.g., water-soluble polymer) dissolved in the aqueous liquid. As a result, the absorption or diffusion into the viscous substance 5 is prevented or controlled effectively due to the presence of the highly viscous and water-soluble polymer, regardless of the characteristics of the viscous substance 5, i.e., even if the viscous substance 5 is a lipophilic substance, a hydrophilic substance or an emulsion. Therefore, it is considered that the overtime deterioration of slipperiness exhibited by the liquid film 3 may be prevented or controlled effectively.

Further, the behavior of the non-Newtonian aqueous liquid has a great influence also on the slipperiness. That is, when the viscous substance 5 flows on the surface of the liquid film 3, the viscosity of the surface of the liquid film 3 may deteriorate considerably since a shear force is applied to the surface of the liquid film 3. As a result, the liquid on the surface of the liquid film 3 flows following the viscous substance 5 to contribute to improvement in slipperiness to the viscous substance 5.

Further, the present inventors presume as follows regarding prevention of involvement of air bubbles.

In a case where the liquid film 3 (oil film) is formed of an oil such as an edible oil as shown in Fig. 2, when a water-containing substance 5 such as an emulsion flows on the liquid film 3, the liquid film 3 exhibits excellent slipperiness due to its high water-repellency. On the other hand, since the water-containing substance 5 has a poor wettability to the liquid film 3, the water-containing substance and the liquid film 3 may not come to a close contact with each other, thereby causing involvement of air bubbles 7 between the liquid film 3 and the water-containing substance 5. If the water-containing substance 5 is viscous and thick, the air bubbles 7 cannot be released but be distributed on the interface between the water-containing substance 5 and the liquid film 3, thereby forming a surface on which the air bubbles are distributed. When the emulsion contains a smaller amount of oily substance (lipid), the aforementioned tendency may be more noticeable since more water is contained and wettability to the liquid film 3 (oil film) becomes lower.

On the other hand, in a case where the liquid film 3 of a non-Newtonian aqueous liquid is formed according to the present invention, the liquid film 3 may exhibit a high hydrophilicity, and thus, the emulsion exhibits a high wettability to the liquid film 3 and flows on the liquid film 3 so as to be in close contact with the liquid film 3. As a result, the emulsion involves rarely air bubbles, and thus, air bubbles on the surface can be prevented effectively.

In addition to that, the non-Newtonian aqueous liquid thickened with a water-soluble polymer exhibits thixotropy and it exhibits also a high viscosity under low load, whereby the liquid is held stably on the surface of the base material 1. The thus formed liquid film 3 may be held stably without dropping off from the surface of the base material 1. Furthermore, due to the thixotropy, the viscosity may be decreased considerably under high load. That is, when the highly viscous emulsion flows on the liquid film 3, the viscosity of the surface area of the liquid film 3 may be decreased due to the stress, and the liquidity may be enhanced. As a result, the highly viscous emulsion can flow on the liquid film 3 without being subjected to resistance, whereby the emulsion may be provided with high slipperiness.

In a case where the viscous and thick emulsion flows on the liquid film 3, substantially no stress is created between the liquid film 3 and the surface of the base material 1. As a result, the liquid film 3 exhibits a high viscosity at an area closer to the surface of the base material 1, and the high viscosity serves to hold the liquid film 3 firmly to the surface of the base material 1. Therefore, dropout or exhaustion of the liquid film 3 can be avoided effectively at the time the viscous and thick emulsion flows repeatedly on the liquid film 3, so that probably the excellent slipperiness can be exhibited sustainably for a long time as described above.

In contrast, since a film of an edible oil or the like does not exhibit thixotropy, when a viscous and thick emulsion flows on the surface of the oil film, the film may be dropped off gradually from the surface of the base material 1, thereby degrading considerably the slipperiness over time.

<Base material 1>

From the viewpoint of exhibiting excellent slipperiness to the emulsion in a sustainable manner, the base material 1 is shaped as a container to contain the emulsion and a container lid. The aforementioned liquid film 3 is formed on a surface of the base material 1 to be brought into contact with the emulsion.

In the present invention, there is no particular limitation on the base material 1 as long as the liquid film 3 of a non-Newtonian aqueous liquid can be held on the surface of the base material 1, and the base material 1 can be formed from any suitable materials such as a resin, glass, a metal, and paper.

For the purpose of utilizing to the utmost the feature of the present invention of preventing effectively distribution of air bubbles on a surface, preferably the base material 1 is transparent. For this reason, the base material 1 is preferably made of glass or synthetic resin. Further, for the purpose of providing excellent slipperiness to a viscous and thick emulsion, most preferably the base material 1 is made of a synthetic resin to be used for forming a container to contain the emulsion.

The synthetic resin (hereinafter, which may be called underlying resin) may be any formable thermoplastic resin or thermosetting resin. Usually, a thermoplastic resin is preferred from the viewpoint of easy formation.

Examples of the thermoplastic resin are as follows.

Olefin resins such as random or block copolymers of $\alpha$-olefins such as low-density polyethylene, high-density polyethylene, polypropylene, poly1-butene, poly4-methyl-1-pentene, random or block copolymers of $\alpha$-olefins such as ethylene, propylene, 1-butene or 4-methyl-1-pentene and a cyclic olefin copolymer;

Ethylene-vinyl copolymers such as ethylene-vinyl acetate copolymer, ethylene-vinyl alcohol copolymer, and ethylene-vinyl chloride copolymer;

Styrene type resins such as polystyrene, acrylonitrile -styrene copolymer, ABS, and $\alpha$-methylstyrene-styrene copolymer;

Vinyl type resins such as polyvinyl chloride, polyvinylidene chloride, vinyl chloride-vinylidene chloride copolymer, methyl polyacrylate, and polymethylmethacrylate;

Polyamide resins such as Nylon 6, Nylon 6-6, Nylon 6-10, Nylon 11, and Nylon 12;

Polyester resins such as polyethylene terephthalate (PET), polybutylene terephthalate, polyethylene naphthalate, and copolymerized polyesters thereof;

Polycarbonate resins;

Polyphenylene oxide resins; and

Biodegradable resins such as polylactic acid.

Needless to note, any of these thermoplastic resins can be blended to be used as an underlying layer as long as the formability is not impaired.

Among the aforementioned thermoplastic resins, the olefin resins and polyester resins, which are used as materials for a container to contain a viscous and thick content, are used preferably in the present invention, and the olefin resins are used most preferably.

The olefin resins are flexible and they are subjected to direct blow-formation described above to provide a squeezed bottle. The olefin resin is suitable also from the viewpoint of applying the present invention to such bottles.

The base material 1 may have a single layer structure of the aforementioned thermoplastic resin, or it may have a multi-layered structure as a combination of a plurality of thermoplastic resins. It may be also a laminated body of a thermoplastic resin and paper if transparency is not particularly required.

In particular, when the inner surface of the container is formed of an olefin resin or a polyester resin, an oxygen barrier layer or an oxygen absorbing layer may be laminated as an intermediate layer via any suitable layer of adhesive resin, while a resin of the same type as that of the underlying resin (olefin resin or a polyester resin) forming the inner surface may be laminated on the outer surface side.

The oxygen-barrier layer in the multi-layered structure is formed of an oxygen-barrier resin such as ethylene-vinyl alcohol copolymer and polyamide, for instance. Any other thermoplastic resin may be blended with the oxygen-barrier resin as long as the oxygen-barrier property is not impaired.

Further as described in JP-A-2002-240813 for instance, the oxygen-absorbing layer is a layer including an oxidizable polymer and a transition metal-based catalyst. The oxidizable polymer is oxidized by oxygen due to the action of the transition metal-based catalyst, thereby absorbing the oxygen to block permeation of the oxygen. Since the oxidizable polymer and a transition metal-based catalyst are described in detail in the JP-A-2002-240813, the detailed description is omitted here. Representative examples of the oxidizable polymer include an olefin resin having a tertiary carbon atom (such as polypropylene, polybutene-1, or a copolymer thereof), thermoplastic polyester or aliphatic polyamide; a xylylene group-containing polyamide resin; and ethylenically unsaturated group-containing polymer (such as a polymer derived from a polyene such as butadiene). Representative examples of the transition metal-based catalyst include inorganic salts, organic acid salts or complex salts of transitional metals such as iron, cobalt and nickel.

The adhesive resins used for adhering the respective layers are known per se, and the examples include olefin resins graft-modified with carboxylic acids such as maleic acid, itaconic acid, fumaric acid or an anhydride thereof, amide, ester or the like; an ethylene-acrylic acid copolymer; an ion-crosslinked olefin copolymer; and an ethylene-vinyl acetate copolymer.

Thickness of each layer mentioned above can be set suitably in accordance with the properties required for the layer.

It is also possible to provide as an inner layer a regrind layer prepared by blending a scrap like a burr generated during formation of the base material 1 having the aforementioned multi-layered structure, with a virgin resin such as an olefin resin. Needless to note, in the base material 1 having a surface formed of either an olefin resin or a polyester resin, it is also possible to form the other surface with either a polyester resin or an olefin resin.

Since the base material 1 of the present invention exhibits excellent slipperiness to a viscous and thick emulsion, it is a container to contain the emulsion.

The shape of the container is not limited particularly, but it can be shaped to make a cup, a bottle, a pouch, a syringe, a pot, a tray or the like in accordance with the material of the container, or it may be shaped by stretching. That is, the container may be formed by any method known per se.

Fig. 3 shows a directly blow-formed bottle, which is the most preferable form of the base material 1 of the present invention. This type of bottle has been widespread as a container to contain a viscous and thick emulsion like a mayonnaise-type food.

The bottle indicated as 10 as a whole in Fig. 3 has a screwed neck portion 11, a body portion wall 15 linked to the neck portion 11 through a shoulder portion 13, and a bottom wall 17 that closes the lower end of the body portion wall 15. A liquid film 3 is to be formed on the inner surface of the bottle.

The bottle 10 is used for containing an emulsion, a viscous and thick substance. The bottle 10 is filled with the content, then sealed with an aluminum foil 18 or the like, and further equipped with a cap 19 so as to be used. The emulsion (i.e. a viscous and thick substance) contained inside the bottle is discharged by removing the cap 19, peeling the aluminum foil 18 off, and by squeezing the bottle 10 at the body portion wall 15. If the liquid film 3 of the non-Newtonian aqueous liquid is formed on the inner surface of the bottle such that the slipperiness to the content is improved and sustained, the content can be discharged quickly. Furthermore, the content can be discharged completely to be used up.

<Liquid film 3>

In the present invention, the liquid film 3 to be arranged on the surface of the aforementioned base material 1 is formed of thickened water. The thickened water is a non-Newtonian aqueous liquid, and it is prepared by dissolving a water-soluble polymer in water.

The thickened water exhibits thixotropy. Due to its viscosity characteristics, the thickened water may be held stably on the surface of the base material 1, and exhibits high slipperiness to a viscous and thick emulsion. The slipperiness may be sustained for a long time.

For instance, the thickened water used for forming the liquid film 3 preferably has a viscosity, measured using a turning-fork type vibration viscometer SV-10, of not less than 690 mPa•s, and particularly preferably in a range of 1000 to 15000 mPa•s, when the viscosity is measured at the number of revolutions of 20 rpm at 25°C. When the viscosity is extremely low, the liquid film 3 may easily drop off from the surface of the base material body 1, making it difficult to hold the liquid film 3, and as a result, the slipperiness cannot be sustained for a long time. When the viscosity is extremely high, the liquid film 3 may become a hard gel to impair the slipperiness.

Examples of the water-soluble polymer used for forming the non-Newtonian aqueous liquid in the present invention are as follows.

Natural polymers such as: plant polysaccharide type polymers such as guar gum, xanthan gum, locust bean gum, quince seed gum, carrageenan, pectin, mannan, starch, and agar; microbial polysaccharide type polymers such as xanthan gum, succinoglycan, curdlan, hyaluronic acid, and dextran; and plant protein type polymers such as gelatin, casein, albumin, and collagen;

Semisynthetic polymers such as: cellulosic polymers such as methyl cellulose, ethyl cellulose, hydroxy cellulose, hydroxypropyl cellulose, carboxymethyl cellulose, and cationized cellulose; starch type polymers such as solubilized starch, and carboxymethyl starch; alginate type polymers such as propylene glycol alginate ester; and polysaccharide derivative polymers;

Synthetic polymers such as: vinyl type polymers such as polyvinyl alcohol, polyvinyl pyrrolidone, polyacrylic acid, polyacrylamide, and derivatives thereof; and polyethylene oxide, polyethylene oxide-polypropylene oxide block copolymer, and the like.

Among the aforementioned water-soluble polymers, the natural polymers are preferred when impact on the environment is taken into consideration. Guar gum and xanthan gum are preferred in particular since they provide a particularly high thickening effect.

Each of the aforementioned polymers preferably has a molecular weight of not less than 100,000, particularly preferably, not less than 1,000,000. It is further preferable if an association phenomenon occurs among the polymers in water, because it is considered that the apparent molecular weight is increased due to the occurrence of association phenomenon, thereby enabling to prevent or control more effectively deterioration caused by aging in the aforementioned slipperiness.

In the present invention, the non-Newtonian aqueous liquid obtained by using the aforementioned various water-soluble polymers preferably satisfies a contact angle condition represented by the following formula (1):

$$\theta_1 > \theta_2 \qquad (1)$$

wherein $\theta_1$ is a contact angle of the aqueous liquid on the base material in air, and
$\theta_2$ is a contact angle of the aqueous liquid on the viscous substance in air. In this manner, it is possible to further enhance the slipperiness to the viscous substance.

The above formula (1) indicates that the non-Newtonian aqueous liquid will get wet more easily by the viscous substance 5 than by the base material 1. That is, in a case where the non-Newtonian aqueous liquid (or the type of the resin materials for the base material 1 and the viscous substance 5) is selected to satisfy the condition of formula (1), the viscous substance 5 can wet-spread rapidly on the entire surface of the liquid film 3 when the viscous substance 5 comes in contact with the surface of the liquid film 3, thereby exhibiting lubricity to the viscous substance 5.

In addition to that, since the liquid film 3 hardly wet-spread with respect to the base material 1, decrease in film thickness over time (i.e., decrease in thickness of the liquid film 3 due to a creep) does not occur easily. This is deduced as contributing to make the slipperiness be sustained for a long time as indicated in the following Examples.

Usually, the liquid film 3 might be peeled off from the base material 1 when $\theta_1$ is greater. However in fact, the liquid film 3 may hardly be peeled off from the base material 1 since the liquid film 3 is a non-Newtonian liquid (in particular, a thixotropic liquid) and the aqueous liquid forming the liquid film 3 exhibits an extremely high viscosity on the interface between the base material 1 and the liquid film 3.

This also is considered as contributing to make the slipperiness be sustained for a long time.

The value of $\theta_1$ is preferably not less than 70°, more preferably not less than 80°, and most preferably not less than 90°. It is considered that the decrease in film thickness over time can be prevented effectively by setting the $\theta_1$ within the range.

For instance, as described in Examples below, in a case of applying an oil-in-water emulsion as the viscous substance 5, the contact angle of an aqueous solution of 1 part by weight of xanthan gum with respect to the polyethylene base material (base material 1) is 92°, and the contact angle of this aqueous solution with respect to the oil-in-water emulsion is 57°. The contact angle of an aqueous solution of 1 part by weight of guar gum with respect to the polyethylene base material is 89°, and the contact angle of this aqueous solution with respect to the oil-in-water emulsion is 52°. In light of this, the condition of the above formula (1) is satisfied by the embodiment of forming the liquid film 3 from a polyethylene base material (base material 1) by use of an aqueous solution of 1 part by weight of either xanthan gum or guar gum and by flowing on this liquid film 3 the oil-in-water emulsion as the viscous substance 5, thereby exhibiting favorable slipperiness.

The aforementioned water-soluble polymer is used in an amount to obtain the viscosity characteristics as described above, usually in a range of about 0.5 to 5 parts by mass per 100 parts by mass of water, though it varies depending on the types.

For instance, thickened water prepared by mixing 1 g of xanthan gum as a water-soluble polymer in 100 g of water has a viscosity of 1200 mPa•s at 20 rpm and a viscosity of 14997 mPa•s at 1 rpm, namely, it has thixotropy. Since the thickened water has thixotropy, the initial slipperiness can be increased and the slipperiness can be sustained for a long time. When the thixotropy is small (difference in viscosity is low), the initial slipperiness tends to be low. In addition, the thickened water on the surface of the base material 1 may not be held stably. As a result, the slipperiness tends to deteriorate more each time a substance flows on the thickened water, which may result in unsatisfactory sustainability of slipperiness.

It is preferable that the liquid film 3 formed of the non-Newtonian aqueous liquid obtained by use of the water-soluble polymer is formed on the surface of the base material usually in the amount of 0.5 to 10 mg/cm$^2$, more preferably 0.65 to 6.56 mg/cm$^2$, and further preferably 2.62 to 4.37 mg/cm$^2$ from the view point of exhibiting excellent slipperiness in sustainable manner. When the amount is extremely large, it may be difficult to hold the liquid film 3 stably, and thus, the slipperiness may fluctuate easily. When the amount is extremely small, the slipperiness cannot be sustained for a long time.

<Viscous substance 5>

The structured body of the present invention having the aforementioned base material 1 and the liquid film 3 is used in a state where the viscous substance 5 is placed on the liquid film 3 to be in contact with the liquid film 3.

Namely, by arranging the viscous substance 5 to be in contact with the liquid film 3, the viscous substance 5 may be allowed to flow quickly. For instance, favorable slipperiness may be exhibited even in a case where the viscous substance 5 is flown after a long-time storage.

Examples of viscous substances provided by the present disclosure include a mayonnaise-type food, ketchup, various kinds of sauces (e.g., Worcestershire sauce and Japanese brown sauce), water-base adhesive, honey, mayonnaise, mustard, dressing, salad creamy dressing, jam, chocolate syrup, cosmetic liquids such as milky lotion, liquid detergent, shampoo, rinse, conditioner, adhesive, and toothpaste. In order to exhibit particularly favorable slipperiness, for instance, the type of the viscous substance 5 may be selected to satisfy the aforementioned formula (1) in accordance with the type of the aforementioned base material 1 and the liquid film 3.

The viscous substance 5 used in the present invention is an emulsion.

From the viewpoint of ensuring high slipperiness, the aforementioned viscous substance 5 is preferably a viscous and thick substance having viscosity at 25°C of not less than 100 mPa•s, further preferably not less than 1000 mPa•s, and particularly preferably it is an oil-in-water emulsion. Use of the viscous and thick emulsion as the viscous substance 5 serves to prevent deterioration in appearance or the like caused by air bubble distribution, and thus, the effects of the present invention can be exhibited effectively.

<Formation of liquid film 3>

In the aforementioned structured body of the present invention, the liquid film 3 is formed by coating an aqueous liquid on the surface side (a part to come in contact with the emulsion) of the base material 1, where the aqueous liquid is obtained by mixing a water-soluble polymer and water.

The coating can be performed by any known methods depending on the shape of the base material 1, and the examples include spraying, knife coating, and roller coating. Spraying is employed most preferably since the thickened water has thixotropy.

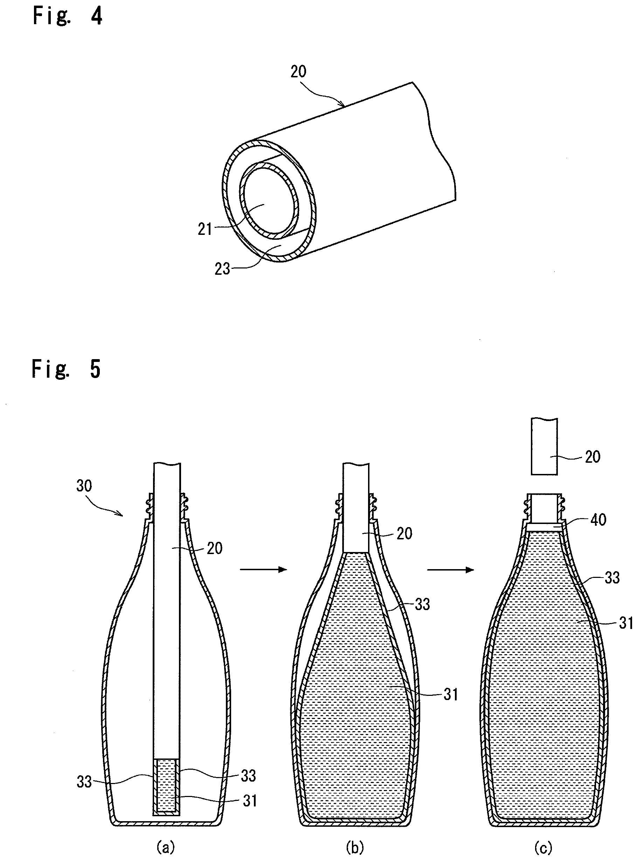

Alternatively in the present invention, the liquid film 3 can be formed at the time of filling the container with the content (viscous substance 5) by using a multi-tube nozzle 20 as shown in Fig. 4.

The multi-tube nozzle 20 in Fig. 4 comprises a center tube 21 and an annular tube 23 formed outside to surround the center tube 21. That is, the center tube 21 composing a core tube of the multi-tube nozzle 20 is used for filling of the viscous substance 5 (content), while the annular tube 23 composing the outermost tube of the multi-tube nozzle 20 is used for feeding the non-Newtonian aqueous liquid to form a lubricating layer 3.

Filling of the content and forming the liquid film 3 by use of the multi-tube nozzle 20 may be performed in accordance with the process shown in Fig. 5.

That is, as shown in Fig. 5(a), the multi-tube nozzle 20 is inserted into an empty container 30 to start filling of the content 31 through the center tube 21 and also feeding of a liquid (non-Newtonian aqueous liquid) 33 through the annular tube 23. Here, the container 30 corresponds to the base material 1 having a shape of container, i.e., an empty container 10 shown in Fig. 3, from which a closed portion 17 is cut off in advance; the content 31 corresponds to the viscous substance 5. At that time, feeding of the liquid 33 starts a little earlier than the filling of the content 31. In other words, the content 31 is filled in a state where the tip end of the center tube 21 of the multi-tube nozzle 20 is covered with the liquid 33. By filling of the content 31 in this manner, the content 31 covered with the liquid 33 is fed into the empty container 30 as shown in Fig. 5(a).

Filling of the content 31 is performed in this manner, while the multi-tube nozzle 20 is lifted gradually as shown in Fig. 5B accompanying the increase of the filling amount, so that the filled content 31 (and also the liquid 33) may not reach or come into contact with the around of the multi-tube nozzle 20. After a predetermined amount of content 31 is filled, the filling of the content 31 and the feeding of the liquid 33 are stopped, and the multi-tube nozzle 20 is pulled out from the empty container 30 as shown in Fig. 5(c), thereby finishing the operation for filling of the content 31 and feeding of the liquid 33. Finally, the upper end of this container 30 is sealed with a lid material or the like to obtain a packaged container filled with the aimed content 31.

In the thus obtained packaged container, the content 31 (viscous substance 5) is covered with the liquid 33 (liquid film 3) as shown in Fig. 5(c). This liquid 33 is held stably by the filling pressure of the content 33 so as to come in contact with the surface of the container 30 (base material 1), and thus, the aforementioned slipperiness by the liquid film 3 may be exhibited stably. This slipperiness may be exhibited effectively even after a long-time storage.

The structured body of the present invention is used preferably as a container for containing an emulsion (a viscous and thick water-containing substance) having a viscosity of not less than 100 mPa·s at 25°C, and particularly preferably as a directly blow-formed container. It is used preferably, for containing a mayonnaise-type food, dressing, and cosmetic liquids like a milky lotion for instance, and most preferably, for containing a low-fat mayonnaise-type food with a lipid content of not more than 34%.

Examples:

The invention will be described by way of the following Examples.

The container, the liquid film and the content used in each of Examples and Comparative Examples are as mentioned below.

<Container>

A multi-layered directly blow-formed bottle having a multi-layered structure of the following layer constitution and an internal capacity of 400 g was prepared.
Inner layer: low-density polyethylene resin (LDPE)
Intermediate layer: ethylene-vinyl alcohol copolymer (EVOH)
Outer layer: low-density polyethylene resin (LDPE)
Adhesive layer (between inner/outer layer and intermediate layer): acid-modified polyolefin

<Aqueous liquid>

Xanthan gum aqueous solution

A predetermined amount of xanthan gum was mixed sufficiently with 100 g of water to prepare an aqueous solution.

Guar gum aqueous solution

A predetermined amount of guar gum was mixed sufficiently with 100 g of water to prepare an aqueous solution.

<Oily liquid>

Medium-chain fatty acid loaded salad oil (viscosity: 33 mPa•s)

<Methods for measurement>

Contact angle measurement;

Under the condition of 20°C, 50%RH, contact angles (about 2 $\mu$L) of each liquid in air to the base material (container inner surface) and to the viscous substance were measured by using a contact angle gauge (DropMaster700 manufactured by Kyowa Interface Science Co., Ltd.).

Here, $\theta_1$ denotes a contact angle on the base material, and $\theta_2$ denotes a contact angle on a viscous substance, of each liquid in air.

Viscosity measurement of aqueous liquid;

Digital viscometer LV Spindle LV4 (manufactured by Brookfield Ametec) was used to rotate the spindle for 1 minute at each revolution number at 25°C to measure viscosity.

<Viscous substance (content)>

For the viscous substance, an oil-in-water emulsion (lipid content = 34%, viscosity = 1260 mPa•s) was used. The viscosity was the value measured at 25°C by using a turning-fork type vibration viscometer SV-10 (manufactured by A&D Company Limited).

<Slipperiness evaluation>

A spray nozzle was inserted inside a bottle to reach the bottom, and pulled up while spraying an aqueous liquid (or an oily liquid) to coat the area from the bottle bottom to the whole side wall. The bottle formed with a liquid film was filled with 400 g of contents of the aforementioned viscous substance by a usual method, heat-sealed with an aluminum foil at the mouth portion and sealed tightly with a cap so as to obtain a filled bottle.

The bottle filled with content was stored at 23°C for one week (initial bottle).

The filled bottle was stored further for each period and at each temperature as illustrated in Table 1, then pressed at the body portion to squeeze out completely the content through the bottle mouth portion. Later, air was introduced into the bottle to restore the bottle shape.

Then, this bottle was placed upside down (i.e., the mouth portion facing downward) and stored for one hour. After that, the degree of slipperiness of the content on the bottle body portion wall (the degree the body portion wall without content adhered) was measured to calculate the content adhesion rate by the following formula.

Content adhesion rate (%) = (Surface area with content adhered / surface area of bottle body portion wall) X 100

Based on the content adhesion rate calculated from the above formula, the slipperiness was evaluated with reference to the following criteria.

○: Content adhesion rate is less than 10%

Δ: Content adhesion rate is 10% or more and less than 50%

X: Content adhesion rate is 50% or more

<Example 1>

An aqueous liquid was prepared by mixing 1 g of xanthan gum and 100 g of pure water. This aqueous liquid was used to perform the aforementioned viscosity measurement. Viscosity at 20 rpm was 1200 mPa•s, viscosity at 1 rpm was 14997 mPa•s, i.e., the aqueous liquid exhibited non-Newtonian characteristics.

This aqueous liquid was used for the aforementioned contact angle measurement. The results are shown in Table 1.

Further, slipperiness was evaluated by using the container (bottle) prepared in the aforementioned manner. The aqueous liquid was coated by using an air spray. The results of the slipperiness evaluation are shown in Table 1.

<Example 2>

An aqueous liquid was prepared by mixing 1 g of guar gum and 100 g of water.

This aqueous liquid was used to perform the contact angle measurement and the slipperiness evaluation similarly to Example 1. The results are shown in Table 1.

<Comparative Example 1>

The contact angle measurement and the slipperiness evaluation were performed similarly to Example 1, by using a medium-chain fatty acid loaded salad oil (Newtonian liquid having viscosity of 33 mPa•s). The results are shown in Table 1.

Table 1

| | Liquid composition | | | | Contact angle | | Slipperiness evaluation | | | |
|---|---|---|---|---|---|---|---|---|---|---|
| | Xanthan gum | Guar gum | Water | * | Contact angle $\theta_1$ (°) on lipophilic base material | Contact angle $\theta_2$ (°) on viscous substance | Coating amount (mg/cm$^2$) | Initial | 2-week storage | 2-month storage |
| Ex. 1 | 1 | | 100 | | 92.3 | 57.0 | 2.62 | ○ | ○ (23°C) | ○ (23°C) |
| Ex. 2 | | 1 | 100 | | 88.8 | 51.9 | 2.62 | ○ | ○ (23°C) | ○ (23°C) |
| Com. Ex. 1 | | | | 100 | 21.1 | 26.7 | 1.97 | ○ | Δ (40°C) | × (40°C) |
| *: Medium-chain fatty acid loaded salad oil | | | | | | | | | | |

Table 1 shows that in Examples 1 and 2 each is directed to a liquid film of a non-Newtonian aqueous liquid formed on a base material, the slipperiness can be sustained longer in comparison with Comparative Example 1 where the liquid film is formed of a Newtonian aqueous liquid. That is, the slipperiness in Examples 1 and 2 is evaluated as favorable.

Further in Examples 1 and 2, the contact angle $\theta_1$ on the base material is greater than the contact angle $\theta_2$ on the viscous substance. This implies that the non-Newtonian aqueous liquid serves to sustain the slipperiness of the liquid film 3.

<Examples 3 to 10>

A bottle was formed and coated with the liquid for liquid film of the amount indicated in Table 2 by an air spray, and filled with a content. After moving the content several times inside the bottle, generation of air bubbles was checked. Later, the slipperiness was evaluated. The results are shown in Table 2.

<Comparative Example 2>

A bottle was formed and coated with water by air spray, and filled with a content. After moving the content several times inside the bottle, generation of air bubbles was checked. Later, the slipperiness was evaluated.

The bottle prepared in Comparative Example 1, which was formed with a liquid film of an edible oil (medium-chain fatty acid loaded salad oil), was filled similarly with a content. After moving the content several times inside the bottle, generation of air bubbles was checked, and further, the slipperiness was evaluated. The results are shown in Table 2.

| Table 2 | | | | | | | | |
|---|---|---|---|---|---|---|---|---|
| | Liquid film | | | | | Slipperiness evaluation | | |
| | Thickening stabilizer (g/100g water) | Coating amount (mg/cm$^2$) | Viscosity (mPa·s) (Revolution number 20rpm) | Viscosity (mPa·s) (Revolution number 1rpm) | Air bubbles | Initial bottle | Bottle stored at 23°C for 2 week | Bottle stored at 23°C for 2 month |
| Ex. 3 | 1.0 | 2.62 | 1200 | 14997 | No | ○ | ○ | ○ |
| Ex. 4 | 1.0 | 0.65 | 1200 | 14997 | No | ○ | ○ | Δ |
| Ex. 5 | 1.0 | 4.37 | 1200 | 14997 | No | ○ | ○ | ○ |
| Ex. 6 | 1.0 | 6.56 | 1200 | 14997 | No | ○ | ○ | ○ |
| Ex. 7 | 5.0 | 2.62 | 15207 | 119000 | No | ○ | ○ | Δ |
| Ex. 8 | 3.0 | 2.62 | 8128 | 99579 | No | ○ | ○ | ○ |
| Ex. 9 | 2.0 | 2.62 | 3629 | 32993 | No | ○ | ○ | ○ |
| Ex. 10 | 0.5 | 6.56 | 690 | 5999 | No | Δ | Δ | Δ |
| Com. Ex. 1 | - | 2.62 | 33 | 33 | Yes | ○ | Δ | × |
| Com. Ex. 2 | 0 | 2.62 | 0.89 | 0.89 | No | × | × | × |

As clarified by the evaluation results in Table 2, favorable slipperiness can be achieved when the liquid film is formed of water thickened with a water-soluble polymer (xanthan gum) and the viscosity measured at 20 rpm at 25°C was 690 mPa•s or more, in particular in a range of 1200 to 15300 mPa•s. This is preferable for preventing generation of air bubbles. The liquid film is formed on the base material surface preferably in an amount of 0.65 to 6.56 mg/cm$^2$, and in particular 2.62 to 4.37 mg/cm$^2$, for exhibiting slipperiness.

Explanations of Letters or Numerals:

| | |
|---|---|
| 1: | base material |
| 3: | liquid film |
| 5: | viscous substance |
| 7: | air bubble |
| 10: | directly blow-formed bottle |
| 11: | neck portion |
| 13: | shoulder portion |
| 15: | body portion wall |
| 17: | bottom wall |
| 18: | aluminum foil |
| 19: | cap |

**Claims**

1. A structured body including a base material and a liquid film formed on a surface of the base material, wherein:

   the liquid film is formed of a non-Newtonian aqueous liquid;
   the non-Newtonian aqueous liquid is water thickened with a water-soluble polymer;
   a viscous substance is present on the liquid film and the viscous substance is an emulsion; and
   the base material is a container, the liquid film is formed on an inner surface of the container, and the viscous substance is a content contained in the container.

2. The structured body according to claim 1, wherein the water-soluble polymer is at least one selected from a group consisting of xanthan gum, guar gum, gellan gum, pectin, carboxymethyl cellulose, gelatin, alginic acid, agar and carrageenan.

3. The structured body according to claim 1, wherein the non-Newtonian aqueous liquid has a viscosity, measured using a turning-fork type vibration viscometer SV-10, of not less than 690 mPa•s at 25°C in a measurement at a number of revolutions of 20 rpm.

4. The structured body according to claim 1, wherein the liquid film is formed on the surface of the base material in an amount of 0.5 to 10 mg/cm$^2$.

5. The structured body according to claim 1, wherein the emulsion is a mayonnaise-type food.

6. The structured body according to claim 1, wherein the non-Newtonian aqueous liquid satisfies formula (1) below:

$$\theta_1 > \theta_2 \qquad (1)$$

   wherein $\theta_1$ is a contact angle of the aqueous liquid on the base material in air, and $\theta_2$ is a contact angle of the aqueous liquid on the viscous substance in air.

7. The structured body according to claim 6, wherein the contact angle $\theta_1$ of the non-Newtonian aqueous liquid on the base material in air is not less than 70°.

8. The structured body according to claim 1, wherein the base material has a surface of resin.

9. The structured body according to claim 8, wherein the resin is polyolefin or polyester.

**EP 3 318 137 B1**

**Patentansprüche**

1. Strukturierter Körper, der ein Basismaterial und einen Flüssigkeitsfilm, der auf einer Oberfläche des Basismaterials gebildet ist, beinhaltet, wobei:

   der Flüssigkeitsfilm aus einer nicht-newtonschen wässrigen Flüssigkeit gebildet ist;
   die nicht-newtonsche wässrige Flüssigkeit Wasser, das mit einem wasserlöslichen Polymer verdickt ist, ist;
   eine viskose Substanz auf dem Flüssigkeitsfilm vorhanden ist und die viskose Substanz eine Emulsion ist; und
   das Basismaterial ein Behälter ist, der Flüssigkeitsfilm auf einer Innenfläche des Behälters gebildet ist und die viskose Substanz ein Inhalt, der in dem Behälter enthalten ist, ist.

2. Strukturierter Körper nach Anspruch 1, wobei das wasserlösliche Polymer mindestens eines ist, das aus einer Gruppe bestehend aus Xanthangummi, Guargummi, Gellangummi, Pektin, Carboxymethylcellulose, Gelatine, Alginsäure, Agar und Carrageen ausgewählt ist.

3. Strukturierter Körper nach Anspruch 1, wobei die nicht-newtonsche wässrige Flüssigkeit eine Viskosität, gemessen unter Verwendung eines Schwingungsviskosimeters vom Stimmgabeltyp SV-10, von nicht mehr als 690 mPa•s bei 25 °C in einer Messung bei einer Umdrehungszahl von 20 rpm hat.

4. Strukturierter Körper nach Anspruch 1, wobei der Flüssigkeitsfilm auf der Oberfläche des Basismaterials in einer Menge von 0,5 bis 10 mg/cm$^2$ gebildet ist.

5. Strukturierter Körper nach Anspruch 1, wobei die Emulsion ein Nahrungsmittel vom Mayonnaise-Typ ist.

6. Strukturierter Körper nach Anspruch 1, wobei die nicht-newtonsche wässrige Flüssigkeit Formel (1) unten erfüllt:

$$\theta_1 > \theta_2 \qquad (1)$$

   wobei $\theta_1$ ein Kontaktwinkel der wässrigen Flüssigkeit auf dem Basismaterial in Luft ist und $\theta_2$ ein Kontaktwinkel der wässrigen Flüssigkeit auf der viskosen Substanz in Luft ist.

7. Strukturierter Körper nach Anspruch 6, wobei der Kontaktwinkel $\theta_1$ der nicht-newtonschen wässrigen Flüssigkeit auf dem Basismaterial in Luft nicht weniger als 70 ° ist.

8. Strukturierter Körper nach Anspruch 1, wobei das Basismaterial eine Harzoberfläche hat.

9. Strukturierter Körper nach Anspruch 8, wobei das Harz Polyolefin oder Polyester ist.

**Revendications**

1. Corps structuré comprenant un matériau de base et un film liquide formé sur une surface du matériau de base, dans lequel :

   le film liquide est formé d'un liquide aqueux non newtonien ;
   le liquide aqueux non newtonien est de l'eau épaissie avec un polymère soluble dans l'eau ;
   une substance visqueuse est présente sur le film liquide et la substance visqueuse est une émulsion ; et
   le matériau de base est un contenant, le film liquide est formé sur une surface intérieure du contenant, et la substance visqueuse est un contenu contenu dans le contenant.

2. Corps structuré selon la revendication 1, dans lequel le polymère soluble dans l'eau est au moins un polymère choisi dans un groupe constitué par la gomme xanthane, la gomme guar, la gomme gellane, la pectine, la carboxyméthylcellulose, la gélatine, l'acide alginique, l'agar-agar et le carraghénane.

3. Corps structuré selon la revendication 1, dans lequel le liquide aqueux non newtonien a une viscosité, mesurée en utilisant un viscosimètre à vibration de type à diapason SV-10, non inférieure à 690 mPa•s à 25 °C lors d'une mesure à un nombre de révolutions de 20 tours par minute.

**4.** Corps structuré selon la revendication 1, dans lequel le film liquide est formé sur la surface du matériau de base en une quantité de 0,5 à 10 mg/cm$^2$.

**5.** Corps structuré selon la revendication 1, dans lequel l'émulsion est un aliment de type mayonnaise.

**6.** Corps structuré selon la revendication 1, dans lequel le liquide aqueux non newtonien satisfait la formule (1) ci-dessous :

$$\theta_1 > \theta_2 \, (1)$$

dans laquelle $\theta_1$ est un angle de contact du liquide aqueux sur le matériau de base dans l'air, et $\theta_2$ est un angle de contact du liquide aqueux sur la substance visqueuse dans l'air.

**7.** Corps structuré selon la revendication 6, dans lequel l'angle de contact $\theta_1$ du liquide aqueux non newtonien sur le matériau de base dans l'air n'est pas inférieur à 70°.

**8.** Corps structuré selon la revendication 1, dans lequel le matériau de base a une surface de résine.

**9.** Corps structuré selon la revendication 8, dans lequel la résine est une polyoléfine ou un polyester.

Fig. 1

Fig. 2

Fig. 3

Fig. 4

Fig. 5

(a)          (b)          (c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014023425 A
- WO 2012100099 A
- WO 2013022467 A
- JP 2008022791 A
- WO 2014010534 A
- JP 5713154 B
- WO 2014123217 A
- JP H01131549 B
- JP 2002240813 A

**Non-patent literature cited in the description**

- **STOKES et al.** *Langmuir,* 2011, vol. 27 (7), 3474-3484
- **WANG et al.** *Langmuir,* 2007, vol. 23 (15), 8042-8047